Europäisches Patentamt

European Patent Office

Office européen des brevets

(11) Numéro de publication: **0 367 336**
**A2**

## (12) DEMANDE DE BREVET EUROPEEN

(21) Numéro de dépôt: **89202682.4**

(22) Date de dépôt: **24.10.89**

(51) Int. Cl.5 **B29C 51/14**

(30) Priorité: **04.11.88 IT 2250588**

(43) Date de publication de la demande:
**09.05.90 Bulletin 90/19**

(84) Etats contractants désignés:
**AT BE CH DE ES FR GB GR LI LU NL SE**

(71) Demandeur: **SOLVAY & Cie (Société Anonyme)**
**Rue du Prince Albert, 33**
**B-1050 Bruxelles(BE)**

(72) Inventeur: **Van Rijckevorsel, Jacques**
**Rue de l'Orme, 56**
**B-1040 Bruxelles(BE)**
Inventeur: **Ravera, Georgio**
**Via Le Dante, 29/1**
**I-10066 Torre Pelice(IT)**

(74) Mandataire: **Bouchoms, Maurice et al**
**Solvay & Cie Département de la propriété industrielle 310, rue de Ransbeek**
**B-1120 Bruxelles(BE)**

(54) **Procédé pour réaliser, par thermoformage, un article composite isolant conformé comprenant au moins deux feuilles de polyoléfine et un insert intermédiaire de structure cellulaire.**

(57) Les feuilles de polyoléfine (5, 7) portées à température de moulage et l'insert intermédiaire (6) froid sont introduits dans un moule de thermoformage froid (1, 2). La chaleur cédée par les feuilles de polyoléfine permet l'association entre les éléments constitutifs et leur formage direct pour former un article composite isolant et rigide conformé tel que, par exemple, une tablette arrière pour le garnissage interne d'un véhicule automobile.

EP 0 367 336 A2

## Procédé pour réaliser, par thermoformage, un article composite isolant conformé comprenant au moins deux feuilles de polyoléfine et un insert intermédiaire de structure cellulaire

La présente invention concerne un procédé pour réaliser, par thermoformage, un article composite isolant conformé comprenant au moins deux feuilles de polyoléfine et un insert intermédiaire de structure cellulaire, un tel élément convenant notamment pour la décoration interne de véhicules automobiles.

Pour le garnissage interne de véhicules automobiles et notamment des portières, il est d'usage courant de recourir à des articles thermoformés constitués d'une feuille de polyoléfine de préférence chargée et d'une structure décorative telle qu'un tissu. La réalisation de tels articles est notamment divulguée dans les brevets Etats-Unis 4243456 et 4328067.

Toutefois pour la réalisation de certains articles particuliers de garnissage tel que notamment des tablettes arrières, il peut être préférable d'utiliser des structures présentant des caractéristiques d'isolation thermique et sonique ainsi que des performances mécaniques améliorées.

La présente invention a pour objet de fournir un procédé permettant la production directe de tels articles.

L'invention concerne dès lors un procédé pour réaliser, par thermoformage, un article composite isolant conformé comprenant au moins deux feuilles de polyoléfine et un insert intermédiaire de structure cellulaire qui se caractérise en ce qu'on associe et thermoforme les éléments constitutifs de l'article en une seule opération dans un moule de thermoformage maintenu froid, les feuilles de polyoléfine étant préalablement portées à leur température de moulage et l'insert intermédiaire, d'une épaisseur de 2 à 50 mm étant introduit à température ambiante.

Il a, en effet, été constaté qu'il est possible en utilisant un moule de thermoformage froid d'associer et de thermoformer simultanément un ensemble comprenant les feuilles de polyoléfines chaudes et l'insert intermédiaire froid et d'obtenir ainsi directement des articles composites conformés stables dans le temps et ayant un bel aspect.

En fait, il est apparu que lors du thermoformage d'un tel ensemble la chaleur emmagasinée par les feuilles de polyoléfines est suffisante pour amener l'insert intermédiaire dans des conditions permettant, d'une part, son association avec les feuilles de polyoléfine et, d'autre part, son formage simultané avec les feuilles de polyoléfine. Il a même été constaté qu'il est possible, durant le thermoformage, d'écraser certaines zones de l'insert intermédiaire et donc de conformer directement des articles composites présentant des zones amincies et/ou embouties.

Les feuilles de polyoléfines mises en oeuvre dans le procédé selon l'invention sont, de préférence, réalisées à partir de polyéthylène haute densité ou de polypropylène éventuellement modifiés par des monomères polaires, d'autres polyoléfines n'étant nullement exclues. Notamment pour des raisons économiques et fonctionnelles (technologiques), il est particulièrement indiqué d'incorporer des quantités importantes de matières de charge telles que des fibres cellulosiques et, en particulier, des fibres de bois dans la polyoléfine mise en oeuvre pour réaliser les feuilles. Ainsi il a été constaté que des feuilles de polyoléfines obtenues selon le procédé décrit dans le brevet Etats-Unis 4228116 conviennent particulièrement pour réaliser le procédé selon la présente invention, lesdites feuilles ayant une épaisseur de 0,5 à 6 mm et, de préférence, de 1 à 4 mm.

L'insert intermédiaire de structure cellulaire peut être de nature quelconque. Ainsi, on peut utiliser des inserts thermoplastiques à base de polyoléfines ou de polystyrène ou des inserts en résines de polyuréthanes souples ou semi-rigides. On préfère toutefois mettre en oeuvre des inserts intermédiaires, en poly styrène expansé à cellules fermées.

Il a par ailleurs été constaté que, pour éviter une fusion trop accentuée de la pellicule superficielle de l'insert intermédiaire lors de son contact avec les feuilles de polyoléfine chaudes durant le thermoformage, il peut être avantageux d'appliquer une pellicule d'eau sur les deux faces de l'insert avant son introduction dans le moule de thermoformage. Le recours à ce moyen est particulièrement indiqué lorsqu'on constate que certains types d'articles produits présentent un aspect de surface inégal.

Par ailleurs afin d'améliorer l'accrochage entre les feuilles de polyoléfines et l'insert intermédiaire on peut mettre en oeuvre des feuilles de polyoléfine présentant des perforations telles que des perforations circulaires par exemple d'un diamètre compris entre 1 et 10 mm. De cette façon, durant le thermoformage la pellicule superficielle fondue de l'insert intermédiaire peut s'écouler sous l'action de la pression engendrée par le formage, dans les perforations et ainsi constituer des points d'ancrage de cet insert intermédiaire dans les feuilles de polyoléfines. Le recours à de telles perforations, lorsque cela est possible compte tenu des impératifs d'esthétique, a également pour avantage de permettre une évacuation améliorée de l'air et des gaz emprisonnés entre les éléments constitutifs de l'article durant le thermoformage.

Le procédé conforme à l'invention permet également la réalisation d'articles composites dont au moins une des faces est revêtue d'une structure décorative durant sa production, la structure décorative pouvant être notamment un film ou une feuille plastique, un tissu en fibres naturelles ou syn-thétiques ou encore un cuir artificiel. A cet effet, avant thermoformage il suffit d'introduire en plus dans le moule une ou deux structures décoratives judicieusement disposées par rapport aux autres éléments constitutifs de l'article de façon telle que durant le thermoformage ce ou ces structures décoratives soient associées avec la face ou les faces visibles des feuilles de polyoléfines de l'article conformé.

Le procédé est, par ailleurs, explicité de façon plus détaillée dans l'exemple de réalisation donné, ci-après, et dans lequel on se référera aux figures des dessins annexés dans lesquelles

la fig. 1 est une vue schématique et en coupe d'un moule de thermoformage ouvert et chargé des éléments constitutifs pour la réalisation d'un article conforme à l'invention

la fig. 2 est une vue schématique et en coupe du moule de thermoformage selon la fig. 1 en fin de thermoformage.

Ainsi qu'il apparaît sur les figures, le moule de thermoformage par compression est constitué d'une matrice fixe (1) et d'une matrice mobile (2) équipées de moyens de découpe périphérique non représentés.

Dans le moule ouvert et maintenu à température ambiante on introduit successivement :
- une structure décorative inférieure (3) constituée par un textile maintenu par des éléments de fixation (4)
- une feuille de Wood-Stock (R) de 2 mm d'épaisseur (5) portée à température de thermoformage (Wood-Stock est la marque commerciale de feuilles de polyoléfine chargées de fibres cellulosiques produites et commercialisées par la Société G.O.R. Applicazioni Speciali S.p.A.)
- une feuille de polystyrène expansé de 20 mm d'épaisseur (6) maintenue à température ambiante et pulvérisée d'eau sur ses 2 faces
- une seconde feuille de Wood-Stock (R) de 2 mm d'épaisseur (7) portée à température de thermoformage
- une structure décorative (8) constituée par un textile maintenu par des éléments de fixation (9).

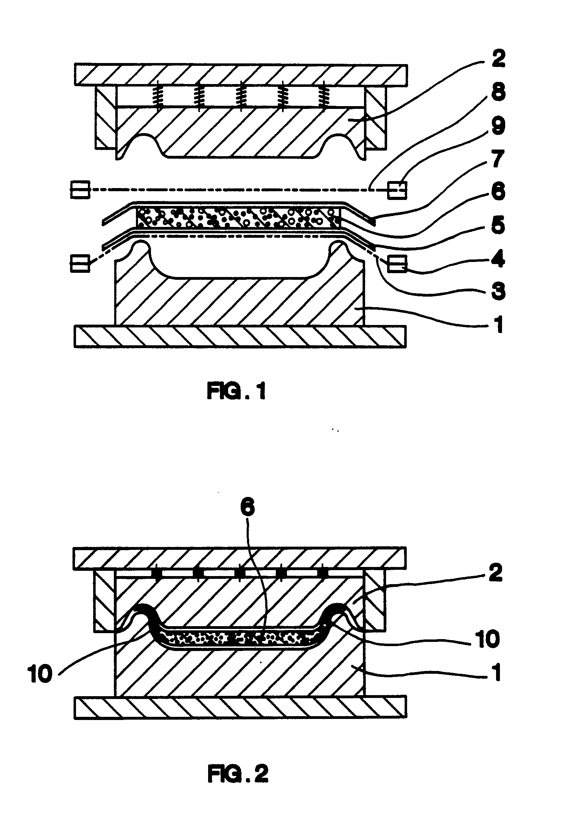

Après cette introduction, il suffit de procéder au thermoformage de cet ensemble en appliquant sous pression la matrice mobile (2) contre la matrice fixe (1) pour obtenir un article composite isolant et rigide conformé ayant un bel aspect. Ainsi qu'il apparaît à la fig. 2 certaines zones (10) de la feuille expansée (6) peuvent être écrasées et/ou déformées durant le formage de façon à obtenir un article conformé ayant des zones amincies et/ou embouties souhaitées.

## Revendications

1 - Procédé pour réaliser, par thermoformage un article composite isolant conformé comprenant au moins deux feuilles de polyoléfine et un insert intermédiaire de structure cellulaire caractérisé en ce que on associe et thermoforme les éléments constitutifs de l'article en une seule opération dans un moule de thermoformage maintenu froid, les feuilles de polyoléfine étant préalablement portées à leur température de moulage et l'insert intermédiaire, d'une épaisseur de 2 à 50 mm étant introduit à température ambiante.

2 - Procédé selon la revendication 1 caractérisé en ce que on met en oeuvre des feuilles de polyoléfine contenant une matière de charge cellulosique.

3 - Procédé selon la revendication 1 ou 2 caractérisé en ce que on met en oeuvre un insert intermédiaire en polystyrène expansé à cellules fermées.

4 - Procédé selon l'une quelconque des revendications 1 à 3 caractérisé en ce que on applique une pellicule d'eau sur les deux faces de l'insert intermédiaire avant son introduction dans le moule de thermoformage.

5 - Procédé selon l'une quelconque des revendications 1 à 4 caractérisé en ce que on met·en oeuvre des feuilles de polyoléfine présentant des perforations telles que des perforations circulaires d'un diamètre compris entre 1 et 10 mm.

6 - Procédé selon l'une quelconque des revendications 1 à 5 caractérisé en ce que, durant le thermoformage, on revêt au moins la face d'une des feuilles de polyoléfine non associée à la feuille intermédiaire d'une structure décorative telle qu'un tissu.

89 202 602.4

FIG. 1

FIG. 2